# EUROPÄISCHE PATENTSCHRIFT

(11) **EP 2 260 687 B1**
(45) Veröffentlichungstag und Bekanntmachung des Hinweises auf die Patenterteilung: **20.07.2016**
(21) Anmeldenummer: 10006001.1
(22) Anmeldetag: 10.06.2010
(51) Int. Cl.: A01B 59/06

(54) **Anbauturm für Heckanbaugerät**
Attachment tower for boot attachment device
Tour de montage pour appareil de montage arrière

(30) Priorität: 10.06.2009 DE 102009024437
(43) Veröffentlichungstag der Anmeldung: 15.12.2010
(73) Patentinhaber: Lemken GmbH & Co. KG, 46519 Alpen (DE)
(72) Erfinder: Basten, Alexander, 54338 Schweich-Issel (DE); Boeging, Michael, 49424 Lutten-Goldenstedt (DE); Giesen, Gottfried, 46519 Alpen (DE)
(74) Vertreter: Schulte & Schulte

(56) Entgegenhaltungen:
- DE-A1- 10 011 401
- DE-A1- 19 515 253

## Beschreibung

Die Erfindung betrifft einen Anbauturm für Heckanbaugeräte wie z. B. Anbaufeldspritzen. Ein gattungsgemäßer Anbauturm ist aus DE 100 11 401 A1 bekannt.

Derartige Anbautürme weisen Koppelpunkte auf, die den Anbau des Heckanbaugerätes an das Dreipunktgestänge des Traktors ermöglichen. Diese Art des Dreipunktanbaus entspricht von der Schnittstelle zwischen Traktor und Gerät her heute üblicherweise der internationalen Norm ISO 730-1. In Anlehnung an diese Norm gibt es verschiedene Kuppelsysteme, die den Anbau an den Traktor vereinfachen sollen. Dabei handelt es sich um einphasige oder mehrphasige Schnellkuppelsysteme gemäß ISO 11001-1, ISO 11001-2, ISO 11001-3 und ISO 11001-4. Diese Kuppelsysteme vereinfachen alle den Anbau eines Heckanbaugerätes an das Dreipunktgestänge des Traktors, allerdings verbleibt nach dem Anbau nur wenig Platz, um z. B. die Gelenkwelle eines Heckanbaugerätes an die Zapfwelle des Traktors anzuschließen oder Elektrokabel und Hydraulikschläuche von hydraulischen oder elektrischen Verbrauchern mit dem Traktor zu verbinden. Dort, wo bei diesen Kuppelsystemen ausreichend Platz zwischen Traktor und Heckanbaugerät vorgesehen ist, tritt dann das Problem mit einem relativ ungünstigen Schwerpunktsabstand des Gerätes zum Traktor auf. Um ein derartiges Heckanbaugerät tragen zu können, muss dann ein entsprechend schwerer und leistungsstarker Traktor eingesetzt werden. Neben dem hohen Gewicht sind solche Traktoren auch teuer, was dadurch den wirtschaftlichen Einsatz eines derartigen Heckanbaugerätes erschwert und auch der Bodenschonung abträglich ist.

Der Erfindung liegt die Aufgabe zugrunde, einen Anbauturm für Heckanbaugeräte zu schaffen, der einen einfachen Anbau des Heckanbaugerätes an das Dreipunktgestänge eines Traktors ermöglicht und der dabei aber auch einen dichten und schwerpunktgünstigen Anbau des Anbaugerätes an den Traktor zulässt.

Die Aufgabe der Erfindung wird durch die Merkmale des Patentanspruches 1 gelöst.

Dadurch dass der obere Koppelpunkt in der beschriebenen Art und Weise einem Bauteil zugeordnet ist, das beweglich ist, ist auch die Kuppelposition für die Verbindung mit dem Oberlenker und für die Arretierung des oberen Koppelpunktes in Arbeitsstellung mit am Koppelpunkt angebauten Oberlenker variabel beweglich. Der Oberlenker des Traktors kann an den oberen Koppelpunkt des Heckanbaugerätes problemlos angebaut werden, auch dann, wenn noch ein großer Abstand zwischen Traktor und Heckanbaugerät vorhanden ist, z. B. 50 cm. Das Bauteil wird dazu so in seiner Lage verändert, dass der Oberlenker an den oberen Koppelpunkt bequem angekuppelt werden kann. Der Oberlenker braucht dazu nicht in seiner Länge verändert zu werden; er kann in seiner für die Arbeit optimalen Längeneinstellung verbleiben. Je nach Beweglichkeit des Bauteils kann der Abstand zwischen Heckanbaugerät und Traktor in der Anbauphase des Oberlenkers auch größer als 50 cm sein. Nach der Verbindung des Oberlenkers mit dem oberen Koppelpunkt und dem Anschließen der Gelenkwelle an die Zapfwelle des Traktors und nach dem Anschließen aller Versorgungsleitungen des Gerätes, kann dann der Traktor dicht an das Anbaugerät herangefahren werden und die Verbindung zwischen Unterlenker des Traktors und den unteren Koppelpunkten des Heckanbaugerätes wie üblich hergestellt werden. Da dann nicht nur das Schnellkuppelsystem der Traktorunterlenker arretiert wird, sondern auch der obere Koppelpunkt in der Arbeitsposition, kann das Gerät ausgehoben werden, ohne dass sich noch Personen zwischen Traktor und Heckanbaugerät begeben müssen.

Die Erfindung sieht weiter vor, dass das Bauteil als Schwinge ausgebildet ist, die für die Verbindung mit dem Oberlenker in eine vordere Kuppelposition und mit dem am Koppelpunkt verbundenen Oberlenker in eine hintere Arbeitsposition schwenkbar ist, wobei die Schwinge und damit auch der obere Koppelpunkt in der Arbeitsposition arretierbar und in der Kuppelposition variabel beweglich ausgebildet sind.

Bei dieser Ausführungsform wird der obere Koppelpunkt einem Bauteil zugeordnet das als Schwinge ausgebildet ist und daher z.B. nicht verschiebbar oder teleskopierbar ist sondern schwenkbar. Im Einsatz mit Feldspritzen kommen häufig Flüssigkeiten zum Einsatz, die Korrosion verursachen. In solchen Fällen ist auf Dauer die Funktionssicherheit von schwenkbaren Bauteilen größer als die von verschiebbaren oder teleskopierbaren Bauteilen.

Insbesondere ist daran gedacht, dass das Dreipunktgestänge des Traktors ein Schnellkuppelsystem mit Fanghaken aufweist, z.B. das Schnellkuppelsystem gemäß ISO-11001-3. Die Fanghaken insbesondere an den Unterlenkern erleichtern die Verbindung der Unterlenker mit den unteren Koppelpunkten des Anbauturms erheblich.

Die Erfindung sieht weiter vor, dass das Bauteil oder die Schwinge über ein Arretiersystem in der Arbeitsposition automatisch arretierbar ausgebildet ist. Diese Ausführungsform hat den Vorteil, dass nach dem Anbau des Gerätes der obere Koppelpunkt nicht manuell, z.B. über eine Fernbedienung arretiert werden muss sondern automatisch arretiert wird.

Erfindungsgemäß ist weiter vorgesehen, dass das Arretiersystem Führungselemente aufweist, die ein vorzeitiges Arretieren des oberen Koppelpunktes während der Kuppelphase verhindernd, ein begrenztes Rangieren des Traktors während der Kuppelphase zulassend und ein Arretieren erst beim Anheben des Heckanbaugerätes bewirkend ausgebildet ist. Diese Besonderheit der Erfindung stellt sicher, dass nach dem Anbau des Oberlenkers an den oberen Koppelpunkt, nach dem Anschließen der Gelenkwelle an die Zapfwelle des Traktors und nach dem Anschließen der Versorgungsleitungen an die entsprechenden Anschlüsse und Kupplungen des Traktors mit dem Traktor so an das Gerät herangefahren werden kann, bis auch die Unterlenker über ihr Schnellkuppelsystem mit den unteren Kuppelpunkten verbunden werden können. Die Schwinge und der mit der Schwinge verbundene obere Koppelpunkt bleiben in dieser Kuppelphase variabel beweglich und werden nicht arretiert. Ein für das Verbinden der Unterlenker des Traktors mit den unteren Koppelpunkten des Heckanbaugerätes erforderliches Rangieren wird dadurch ermöglicht und nicht durch ein vorzeitiges Arretieren des oberen Koppelpunktes erschwert. Erst nachdem die Unterlenker des Traktors mit den unteren Koppelpunkten verbunden sind und das Anbaugerät ausgehoben wird, wird der obere Koppelpunkt in der Arbeitsposition arretiert.

Der Mechanismus ist vorzugsweise so ausgebildet, dass das Arretiersystem und die Führungselemente aus einem Kuppelhaken mit Gegenhaken bestehen, wobei der Kuppelhaken mit seinem hinteren Ende über eine Querachse begrenzt schwenkbar mit dem Anbauturm und der Gegenhaken um ein Quergelenk begrenzt schwenkbar mit dem vorderen Ende des Kuppelhakens verbunden ist. Der Kuppelhaken und der Gegenhaken sind dabei so zueinander angeordnet, dass sie ein Einrasten und Arretieren des oberen Koppelpunktes nicht zulassen, wenn sich der Traktor für den Kuppelvorgang in Richtung Heckanbaugerät bewegt. Wird das Heckanbaugerät aber ausgehoben, wird es durch den Kuppelhaken gehalten und durch den Gegenhaken fixiert und so sicher arretiert.

Außerdem wird vorgeschlagen, dass eine Fernbedienung vorgesehen ist, über die das Arretiersystem ausgerastet wird und so die Schwinge und der obere Koppelpunkt von der Arbeitsposition in die Kuppelposition bringbar ausgebildet sind. Wenn sich die Schwinge und der obere Koppelpunkt in der Arbeitsposition befinden, können sie nicht mehr selbstständig ausgerastet werden. Nur über eine Fernbedienung kann das abgestellte Heckanbaugerät wieder von der Arbeitsposition in die variabel bewegliche Kuppelposition gebracht werden. In dieser Kuppelposition können auch die Unterlenker abgebaut und mit dem Traktor so weit weg gefahren werden, bis wieder ein ausreichender Abstand zwischen Heckanbaugerät und Traktor entstanden ist. Ist der Abstand wieder groß genug, kann die Bedienperson wieder die Gelenkwelle demontieren, die Versorgungsleitungen vom Traktor trennen und den Oberlenker abbauen. Um einen ausreichenden Abstand zwischen Traktor und Heckanbaugerät für die Kuppelarbeiten sicherzustellen, muss der obere Koppelpunkt zwischen der Arbeitsposition und der Kuppelposition mindestens 15 cm bis 20 cm horizontal beweglich sein. Optimal ist eine horizontale Beweglichkeit des oberen Kuppelpunktes zwischen 30 cm und 60 cm.

Eine bevorzugte Variante hierzu sieht vor, dass die Fernbedienung als Zugseil ausgebildet ist, das über ein Gestänge kinematisch mit dem Kuppelhaken verbunden ist. Üblicherweise werden auch die Schnellkuppelsysteme der Unterlenker über Zugseile ausgerastet. Es bietet sich daher an, über die gleiche Methode auch den oberen Koppelpunkt auszurasten. Denkbar sind auch Systeme, die hydraulisch oder elektrisch betätigt werden können, die aber hinsichtlich der Funktionssicherheit keine Vorteile bieten. Dies ist auch ein Grund dafür, dass für das erfinderische Kuppelsystem ein mechanisches System bevorzugt gewählt wurde und z.B. kein hydraulisches System.

Unter Beibehaltung der üblichen Schnellkuppelsysteme wie z. B. das Schnellkuppelsystem nach ISO 11001-3 führt dies erfinderische Kuppelsystem des oberen Koppelpunktes dazu, dass Heckanbaugeräte, die äußerst dicht am Traktor angebaut werden müssen, um die Vorderachse des Traktors nicht zu sehr zu entlasten und die Hinterachse des Traktors nicht zu sehr zu belasten, sicher, problemlos und komfortabel an das Dreipunktgestänge eines Traktors angebaut werden können.

Weitere Einzelheiten der Erfindung sind den Figuren und der Figurenbeschreibung zu entnehmen.

Es zeigen:
- Figur 1: die Vorderseite des Anbauturms einer Anbaufeldspritze in Arbeitsposition,
- Figur 2: eine Schnitt durch den oberen Teil des Anbauturms in Kuppelposition für den Oberlenker,
- Figur 3: einen Schnitt durch den oberen Teil des Anbauturms in der Kuppelposition, kurz vor der Arretierung in der Arbeitsposition und
- Figur 4: einen Schnitt durch den oberen Teil des Anbauturms in der Arbeitsposition.

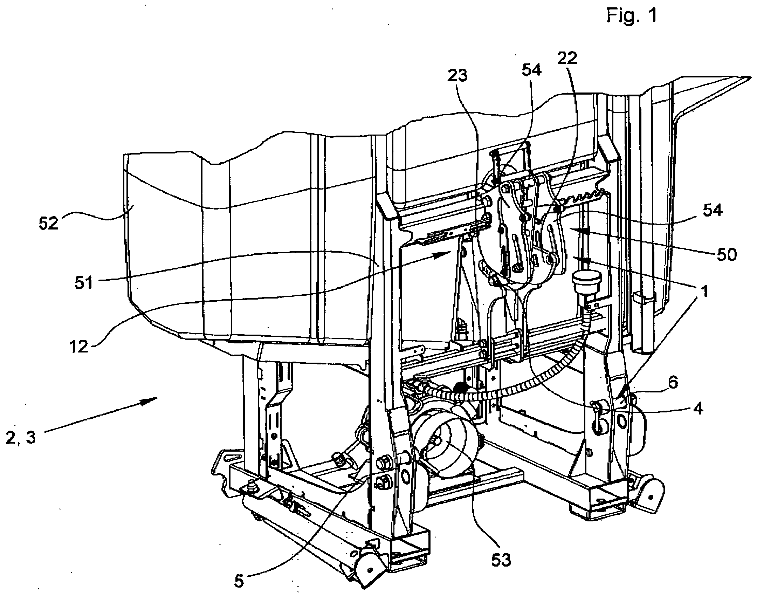

Figur 1 zeigt das Heckanbaugerät 2, in diesem Fall eine Anbaufeldspritze 3, das vorne den Anbauturm 1 aufweist mit dem oberen Koppelpunkt 4 und den unteren Koppelpunkten 5 und 6. Die unteren Koppelpunkte 5 und 6 sind für Unterlenker von Traktoren vorgesehen, die mit einem Schnellkuppelsystem ausgerüstet sind und automatisch bzw. fernbedienbar gekuppelt und abgekuppelt werden können. Der obere Koppelpunkt 4 ist mittelbar dem oberen Teil 50 des Anbauturmes 1 zugeordnet, der wiederum am Rahmen 51 befestigt ist Der Rahmen 51 trägt den Behälter 52 der Anbaufeldspritze 3. Unter dem Behälter 52 ist die Pumpe 53 angeordnet, die über eine nicht dargestellte Gelenkwelle antriebstechnisch mit der Zapfwelle des Traktors verbunden wird. Der obere Koppelpunkt 4 ist dem als Schwinge 10 ausgebildeten Bauteil 9 zugeordnet und befindet sich hier in der Arbeitsposition 12. In der Arbeitsposition 12 ist der obere Koppelpunkt 4 arretiert. Der Kuppelhaken 22 und der Gegenhaken 23 sind eingerastet und arretieren so den oberen Koppelpunkt 4. Näheres dazu ist den weiteren Figuren zu entnehmen, bei denen die rechte Außenplatte der beiden Außenplatten 54 ausgeblendet wurde, um den Innenbereich des oberen Teils 50 des Anbauturmes 1 besser darstellen zu können.

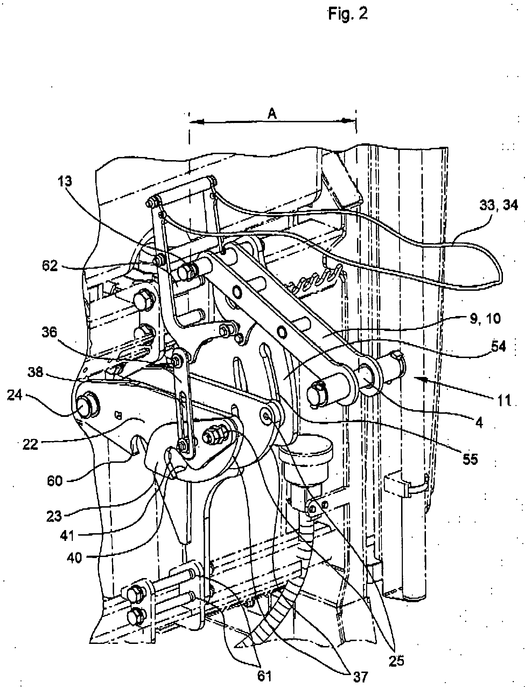

Figur 2 zeigt den oberen Teil 50 des Anbauturmes 1 in der Kuppelposition 11. Die Schwinge 10, die um die Achse 13 zwischen den Außenplatten 54 schwenkbar angeordnet ist, ist für das Ankuppeln des Oberlenkers des Traktors nach vorne geschwenkt. Die Schwinge 10 und damit auch der obere Koppelpunkt 4 werden dann nicht mehr durch den Kuppelhaken 22 und den Gegenhaken 23 fixiert. Die Schwinge 10 kann variabel mehr oder weniger weit nach vorne geschwenkt werden. Unabhängig von der Längeneinstellung des Oberlenkers des Traktors kann so der Oberlenker einfach mit dem oberen Koppelpunkt verbunden werden. Der horizontale Abstand A in Arbeitsrichtung zwischen der Arbeitsposition 12 und der Kuppelposition 11 des oberen Koppelpunktes 4 ergibt den vergrößerten Abstand, der dem Bediener zur Verfügung steht, wenn er sich nach dem Ankuppeln des Oberlenkers für das Verbinden der Gelenkwelle des Heckanbaugerätes 2 mit der Zapfwelle des Traktors und für das Anschließen der Versorgungsleitungen zwischen Traktor und dem Heckanbaugerät 2 begibt. Die variable Beweglichkeit des oberen Koppelpunktes 4 ist etwas größer als der Abstand A, da für den Anbau der Unterlenker an die unteren Koppelpunkte 5 und 6 Möglichkeiten für das Rangieren vorhanden sein müssen. Der Kuppelhaken 22 befindet sich in seiner unteren Stellung und liegt am unteren Ende der Langlöcher 55 der Außenplatten 54 an. Der Gegenhaken 23 befindet sich ebenfalls in seiner unteren Stellung und liegt am unteren Ende der Langlöcher 38 der Stangen 36 an. Über die Schrauben 61 und 62 wird der obere Teil 50 des Anbauturms 1 mit dem Rahmen 51 verschraubt.

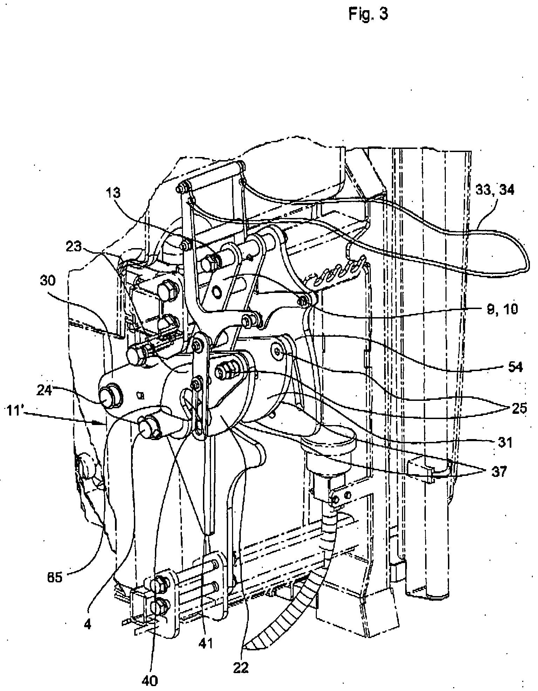

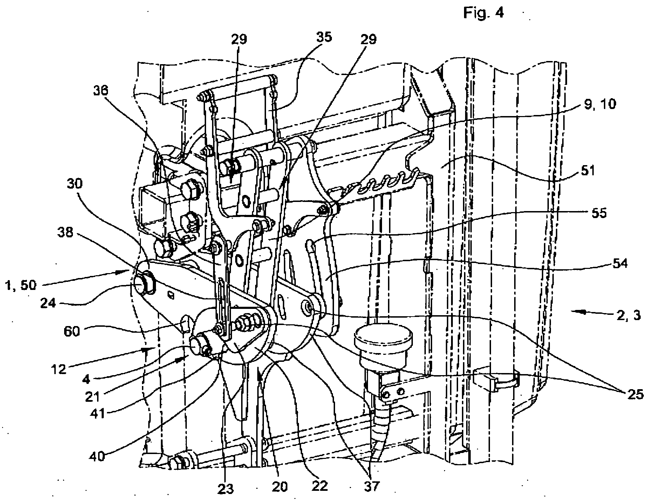

Figur 3 zeigt den oberen Teil 50 des Anbauturms 1 in der Kuppelposition 11, 11', kurz vor der Arretierung des oberen Koppelpunktes 4 in die Arbeitsposition 12 mit bereits mit dem oberen Koppelpunkt 4 verbundenen Oberlenker. Der Übersichtlichkeit halber wurde eine Außenplatte 54 ausgeblendet, wie zuvor schon erwähnt, und auch der Oberlenker des Traktors, der bereits mit dem oberen Koppelpunkt 4 verbunden ist. Der obere Koppelpunkt 4 befindet sich in der variabel beweglichen Kuppelposition 11, und zwar in der Kuppelposition 11', in der auch die unteren Koppelpunkte 5,6 gekuppelt werden können. Für das Kuppeln der unteren Koppelpunkte 5,6 muss der obere Koppelpunkt 4 weiter als normalerweise erforderlich nach hinten in den Anbauturm 1 hinein geschoben werden. Er darf dann noch nicht arretiert werden, weil dann ein Kuppeln der unteren Koppelpunkte 5,6 nicht möglich ist. Über Führungselemente 21, die Bestandteil eines Arretiersystems 20 sind, wird sichergestellt, dass ein Arretieren nur dann möglich ist, wenn der Kuppelvorgang abgeschlossen ist. In der Arbeitsposition 12 gemäß Figur 4 befindet sich der obere Koppelpunkt 4 etwas weiter vome und wird nur in dieser Arbeitsposition 12 durch die Ausnehmungen 40 des Kuppelhakens 22 und den Ausnehmungen 41 des Gegenhakens 23 fixiert. Der Kuppelhaken 22 ist mit seinem hinteren Ende 30 über die Querachse 24 mit dem oberen Teil 50 des Anbauturms 1 verbunden. Am vorderen Ende 31 des Kuppelhakens 22 ist der Gegenhaken 23 über das Quergelenk 25 verbunden. Vorne an den Kuppelhaken 22 befinden sich die Anlaufkanten 37. Wenn der obere Kuppelpunkt 4 während der Kuppelphase in das obere Teil 50 des Anbauturms 1 eingeführt wird, stößt er gegen die Anlaufkante 37 und schiebt den Kuppelhaken 22 nebst Gegenhaken 23 nach oben. Der obere Koppelpunkt 4 wird dabei so weit nach hinten geschoben, bis auch die unteren Koppelpunkte 5 und 6 angekuppelt werden können. Während des dafür erforderlichen Rangiervorganges wird der obere Koppelpunkt 4 nicht arretiert, da sich die Stützfläche 65 des Gegenhakens 23 auf den oberen Koppelpunkt 4 abstützt und der Gegenhaken 23 weiter hoch gehalten wird. Die Anordnung des Kuppelhakens 22 und des Gegenhakens 23 in Verbindung mit der Stützfläche 65 des Gegenhakens 23 ist so ausgelegt, dass ein vorzeitiges Arretieren des oberen Koppelpunktes 4 verhindert wird. Eine Endbegrenzung 60 verhindert, dass der obere Koppelpunkt 4 zu weit in den oberen Teil 50 des Anbauturms 1 eingeführt werden kann. Dies ist der Figur 2 zu entnehmen. Wenn nach dem Kuppelvorgang der Unterlenker der obere Koppelpunkt 4 wieder nach vorne bewegt wird, läuft er in die Ausnehmung 40 des Kuppelhakens 22 hinein. Gleichzeitig fällt der Gegenhaken 23 herunter und umfasst mit seiner Ausnehmung 41 ebenfalls den oberen Koppelpunkt 4. Der obere Koppelpunkt 4 befindet sich dann in der gesicherten und arretierten Arbeitsposition 12, die der Figur 4 zu entnehmen ist.

Die Figur 4 zeigt, wie der obere Koppelpunkt 4 zwischen den Ausnehmungen 40 und 41 der Kuppelhaken 22 und Gegenhaken 23 fest fixiert wird. Dies entspricht wie schon erwähnt der Arbeitsposition 12, in der ein Verschieben des oberen Koppelpunktes 4 nicht mehr möglich ist. Wenn das Heckanbaugerät 2 wieder abgebaut werden soll, wird über ein Gestänge 29 das Arretiersystem 20 entsprechend betätigt. Das Gestänge 29 besteht unter anderem aus einem Winkelhebel 35, einer Stange 36 und aus einem Zugseil 34. Das Zugseil 34 dient hier als Fernbedienung 33. Durch Betätigen des Zugseils 34 wird der Winkelhebel 35 so bewegt, dass er die Stange 36 und damit den Gegenhaken 23 hoch zieht, wodurch der obere Koppelpunkt 4 wieder nach hinten gleiten kann. Gleichzeitig wird auch der Kuppelhaken 22 hochgezogen. Der obere Koppelpunkt 4 ist damit wieder ausgerastet. Auch die Unterlenker des Traktors können nun von den unteren Koppelpunkten 5,6 getrennt werden, dazu kann mit dem Traktor entsprechend rangiert werden. Danach kann man sich mit dem Traktor so weit vom Heckanbaugerät 2 entfernen, bis ausreichend Platz zwischen Heckanbaugerät 2 und Traktor erzielt ist, um die Gelenkwelle von der Zapfwelle des Traktors abzunehmen und die Versorgungsleitungen abzukuppeln. Die Schwinge 10 befindet sich dann noch nicht unter Spannung und der Oberlenker kann problemlos und einfach von dem oberen Koppelpunkt 4 abgenommen werden.

## Patentansprüche

1. Anbauturm (1) für Heckanbaugerät (2) wie z.B. Anbaufeldspritze (3), der einen oberen Koppelpunkt (4) und zwei untere Koppelpunkte (5,6) für die Verbindung mit dem Oberlenker und den Unterlenkern des Dreipunktgestänge eines Traktors aufweist, wobei der obere Koppelpunkt (4) an einem Bauteil (9) angeordnet ist und für die Verbindung mit dem Oberlenker in eine vordere Kuppelposition (11) und mit dem am oberen Koppelpunkt (4) verbundenen Oberlenker in eine hintere Arbeitsposition (12) bewegbar ist, wobei das Bauteil (9) und damit auch der obere Koppelpunkt (4) in der Arbeitsposition (12) arretierbar und in der Kuppelposition (11) variabel beweglich ausgebildet sind,
**dadurch gekennzeichnet,**
**dass** das Bauteil (9) über ein Arretiersystem (20) in der Arbeitsposition (12) automatisch arretierbar ausgebildet ist und das Arretiersystem (20) Führungselemente (21) aufweist, die ein vorzeitiges Arretieren des oberen Koppelpunktes (4) während der Kuppelphase verhindernd, ein begrenztes Rangieren des Traktors während der Kuppelphase zulassend und ein Arretieren erst beim Anheben des Heckanbaugerätes (2) bewirkend ausgebildet sind.

2. Anbauturm für Heckanbaugeräte nach Anspruch 1,
**dadurch gekennzeichnet,**
**dass** das Bauteil (9) als Schwinge (10) ausgebildet ist, die für die Verbindung mit dem Oberlenker in eine vordere Kuppelposition (11) und mit dem am oberen Koppelpunkt (4) verbundenen Oberlenker in eine hintere Arbeitsposition (12) schwenkbar ist, wobei die Schwinge (10) und damit auch der obere Koppelpunkt (4) in der Arbeitsposition (12) arretierbar und in der Kuppelposition (11) variabel beweglich ausgebildet sind.

3. Anbauturm für Heckanbaugeräte nach Anspruch 1,
**dadurch gekennzeichnet,**
**dass** das Dreipunktgestänge des Traktors ein Schnellkuppelsystem mit Fanghaken aufweist, z.B. das Schnellkuppelsystem gemäß ISO-11001-3.

4. Anbauturm für Heckanbaugeräte nach Anspruch 1 oder 2,
**dadurch gekennzeichnet,**
**dass** die Schwinge (10) über ein Arretiersystem (20) in der Arbeitsposition (12) automatisch arretierbar ausgebildet ist.

5. Anbauturm für Heckanbaugeräte nach Anspruch 1,
**dadurch gekennzeichnet,**
**dass** das Arretiersystem (20) und die Führungselemente (21) aus einem Kuppelhaken (22) mit Gegenhaken (23) bestehen, wobei der Kuppelhaken (22) mit seinem hinteren Ende (30) über eine Querachse (24) begrenzt schwenkbar mit dem Anbauturm (1) und der Gegenhaken (23) um ein Quergelenk (25) begrenzt schwenkbar mit dem vorderen Ende (31) des Kuppelhakens (22) verbunden ist.

6. Anbauturm für Heckanbaugeräte nach Anspruch 4,
**dadurch gekennzeichnet,**
**dass** eine Fernbedienung (33) vorgesehen ist, über die das Arretiersystem (20) ausgerastet wird und so die Schwinge (10) und der obere Koppelpunkt (4) von der Arbeitsposition (12) in die Kuppelposition (11) bringbar ausgebildet sind.

7. Anbauturm für Heckanbaugeräte nach Anspruch 6,
**dadurch gekennzeichnet,**
**dass** die Fernbedienung (33) als Zugseil (34) ausgebildet ist, das über ein Gestänge (29) kinematisch mit dem Kuppelhaken (22) verbunden ist.

## Claims

1. Attachment tower (1) for a rear mounted implement (2) such as, e.g., a mounted field sprayer (3), which has an upper coupling point (4) and two lower coupling points (5, 6) for the connection to the upper link and lower links of the three-point linkage of a tractor, whereby the upper coupling point (4) is arranged at a component (9) and can be moved for the connection with the upper link into a front coupling position (11) and with the upper link connected to the upper coupling point (4) into a rear operating position (12), whereby the component (9) and therefore the upper coupling point (4) as well are designed to be lockable in the operating position (12) and movable and variable in the coupling position (11),
**characterised in that**
the component (9) is designed to be lockable automatically in the operating position (12) via a locking system (20) and the locking system (20) has guide elements (21) that are designed to prevent premature locking of the upper coupling point (4) during the coupling phase, to permit restricted manoeuvring of the tractor during the coupling phase and not to effect locking until the rear mounted implement (2) is raised.

2. Attachment tower for rear mounted implements in accordance with claim 1,
**characterised in that**
the component (9) is designed as a rocker arm (10) that can be pivoted for the connection with the upper link into a front coupling position (11) and with the upper link connected to the upper coupling point (4) into a rear operating position (12), whereby the rocker arm (10) and therefore the upper coupling point (4) as well are designed to be lockable in the operating position (12) and movable and variable in the coupling position (11).

3. Attachment tower for rear mounted implements in accordance with claim 1,
**characterised in that**
the three-point linkage of the tractor has a quick coupling system with hooks, e.g. the quick coupling system in accordance with ISO-11001-3.

4. Attachment tower for rear mounted implements in accordance with claim 1 or 2,
**characterised in that**
the rocker arm (10) is designed to be automatically lockable in the operating position (12) via a locking system (20).

5. Attachment tower for rear mounted implements in accordance with claim 1,
**characterised in that**
the locking system (20) and the guide elements (21) consist of a coupling hook (22) with clamp (23), whereby the coupling hook (22) is connected with the attachment tower (1) with its rear end (30) via a transverse axle (24) with limited pivoting and the clamp (23) is connected with the front end (31) of the coupling hook (22) around a transverse joint (25) with limited pivoting.

6. Attachment tower for rear mounted implements in accordance with claim 4,
**characterised in that**
a remote controller (33) is provided with which the locking system (20) is disengaged so that the rocker arm (10) and the upper coupling point (4) are designed to be brought in this way from the operating position (12) into the coupling position (11).

7. Attachment tower for rear mounted implements in accordance with claim 6,
**characterised in that**
the remote controller (33) is designed as a traction cable (34) that is connected kinematically with the coupling hook (22) via a rod (29).
Attachment tower for rear mounted implement

## Revendications

1. Tour attelée (1) pour appareil attelé à l'arrière (2) comme p. ex. un pulvérisateur attelé (3), qui présente un point de couplage supérieur (4) et deux points de couplage inférieurs (5, 6) pour la liaison avec le bras d'attelage supérieur et les bras d'attelage inférieurs de l'attelage trois points d'un tracteur, sachant que le point de couplage supérieur (4) est disposé sur un composant (9) et peut être déplacé dans une position de couplage à l'avant (11) pour la liaison avec le bras d'attelage supérieur, et dans une position de travail arrière (12) pour la liaison avec le bras d'attelage lié au point de couplage supérieur (4), sachant que le composant (9) et par conséquent aussi le point de couplage supérieur (4) peuvent être arrêtés dans la position de travail (12) et sont conçus de façon à pouvoir être déplacés de façon variable dans la position de couplage (11),
**caractèrisèe par le fait**
que le composant (9) est conçu de façon à pouvoir être automatiquement arrêté dans la position de travail (12) par l'intermédiaire d'un système d'arrêt (20), le système d'arrêt (20) présentant des éléments de guidage (21) qui empêchent tout arrêt précoce du point de couplage supérieur (4) pendant la phase de couplage et permettent une manoeuvre limitée du tracteur pendant la phase de couplage, et est conçu de façon à ne provoquer un arrêt que lorsque l'appareil attelé à l'arrière (2) est soulevé.

2. Tour attelée pour appareil attelé à l'arrière selon la revendication 1,
**caractèrisèe par le fait**
que le composant (9) est conçu sous la forme d'un bras oscillant (10), qui peut être oscillé dans une position de couplage avant (11) pour la liaison avec le bras d'attelage supérieur, et dans une position de travail arrière (12) pour le bras d'attelage supérieur lié au point de couplage supérieur (4), sachant que le bras oscillant (10) et par conséquent aussi le point de couplage supérieur (4) peuvent être arrêtés dans la position de travail (12) et sont conçus de façon à pouvoir être déplacés de façon variable dans la position de couplage (11).

3. Tour attelée pour appareil attelé à l'arrière selon la revendication 1,
**caractèrisèe par le fait**
que l'attelage trois points du tracteur présente un système de couplage rapide avec crochet de récupération, p. ex. le système de couplage rapide selon la norme ISO-11001-3.

4. Tour attelée pour appareil attelé à l'arrière selon les revendications 1 ou 2,
**caractèrisèe par le fait**
que le bras oscillant (10) est conçu de façon à pouvoir être automatiquement arrêté dans la position de travail (12) par l'intermédiaire d'un système d'arrêt (20).

5. Tour attelée pour appareil attelé à l'arrière selon la revendication 1,
**caractèrisèe par le fait**
que le système d'arrêt (20) et les éléments de guidage (21) consistent en un crochet de couplage (22) avec contre-crochet (23), sachant que le crochet de couplage (22) peut être oscillé de façon limitée avec son extrémité arrière (30) avec la tour attelée (1) par l'intermédiaire d'un essieu transversal (24), et que le contre-crochet (23) est lié à l'extrémité avant (31) du crochet de couplage (22) en pouvant être oscillé de façon limitée autour d'une articulation transversale.

6. Tour attelée pour appareil attelé à l'arrière selon la revendication 4,
**caractèrisèe par le fait**
qu'une télécommande (33) est prévue, par l'intermédiaire de laquelle le système d'arrêt (20) est sorti de son cran, le bras oscillant (10) et le point de couplage supérieur (4) étant ainsi conçu de façon à pouvoir être amené depuis la position de travail (12) dans la position de couplage (11).

7. Tour attelée pour appareil attelé à l'arrière selon la revendication 6,
**caractèrisèe par le fait**
que la télécommande (33) est conçue sous la forme d'un câble de traction (34), qui est lié au plan cinématique au crochet de couplage (22) par l'intermédiaire d'une tringle (29).
Tour attelée pour appareil attelé à l'arrière
